# EUROPEAN PATENT APPLICATION

(11) **EP 3 038 237 A1**
(43) Date of publication of application: **29.06.2016**
(21) Application number: 14200037.1
(22) Date of filing: 23.12.2014
(51) Int. Cl.: H02K 11/02

(54) **Connecting system and brush carrier device for an electric motor with a connecting system**

(71) Applicant: Valeo Systèmes d'Essuyage, 78321 La Verrière (FR)
(72) Inventor: Stefani, Siegfried, 71739 Oberriexingen (DE); Heuberger, Christof, 71691 Freiberg (DE); Herrada, Jose-Luis, 78530 Buc (FR)
(74) Representative: Vötsch, Reiner

(57) **Abstract**

The invention relates to a connecting system (10) between a suppressor choke (1) and an electrical connection line (5) in a brush carrier device (100) of an electric motor, wherein the suppressor choke (1) exhibits a lead (2) which is connected with the connection line (5) designed as a lead frame element (6; 6a; 6b; 6c) in the area of a connection (20; 20a; 20b; 20c). The invention provide that the connection (20; 20a; 20b; 20c) between the lead (2) and connection line (5) is established directly, without any additional components.

## Description

### Prior Art

The invention relates to a connecting system between a suppressor choke and an electrical connection line in a brush carrier device of an electric motor according to the preamble of claim 1. The invention further relates to a brush carrier device for an electric motor with the use of a connecting system according to the invention.

A connecting system according to the preamble of claim 1 is already known from practice for a windshield wiper motor. The windshield wiper motor here exhibits a drive motor designed as an electric motor, which has a brush carrier device, in the vicinity of which carbon brushes for abutment against a commutator of an armature of the electric motor along with suppressor chokes are secured or situated, among other things. The suppressor chokes are electrically contacted by connection lines designed as lead frame elements, whose ends facing away from a power supply line are connected with the leads of the suppressor chokes. For this purpose, prior art provides that the areas of a connection line and a suppressor choke lead to be connected with each other be situated inside a ferrule made out of an electrically conductive material, wherein the ferrule is pressed together or crimped during assembly to establish an electrically conductive crimp connection between the connection line and suppressor choke. In addition, it can optionally be provided that such a crimp connection be furnished with another soldered or welded joint.

The disadvantage to such a connection according to prior art is that using or handling such a ferrule as an additional component for connecting the connection line and suppressor choke requires an elevated assembly and joining outlay, and is thus relatively cost-intensive.

### Disclosure of the Invention

Proceeding from the described prior art, the object of the invention is to further develop a connecting system between a suppressor choke and an electrical connection line in a brush carrier device of an electric motor according to the preamble of claim 1 in such a way that a connection can be fabricated more easily or with less assembly and/or cost outlay.

This object is achieved according to the invention in a connecting system between a suppressor choke and an electrical connection line having the features in claim 1 by designing a direct connection between the lead and connection line, without any additional components. In other words, what this means in relation to prior art is that an additional connecting element in the form of a ferrule or the like can be eliminated. Within the meaning of the invention, the (exclusive) use of a soldered or welded joint between the lead of the suppressor choke and the connection line is also understood as an additional component.

Advantageous further developments of the inventive connecting system between a suppressor choke and an electrical connection line are enumerated in the subclaims. The scope of the invention encompasses all combinations of at least two features disclosed in the claims, specification and/or figures.

In structurally implementing the general inventive idea, it is provided that the connection be established by at least regionally shaping an end section of the lead frame element around an end section of the (suppressor choke) lead. As opposed to prior art, in which a squeezed or crimp connection is formed by an additional element, the invention now proposes that such an element be molded as a quasi-single piece onto the connection line in an end section of the lead frame, and designed in such a way as to establish a non-positive connection in the form of a crimp connection between the end section of the lead frame element and the suppressor choke lead by at least regionally bending this end section around the suppressor choke lead.

In order to make it especially easy to join or bring together the suppressor choke lead and corresponding end section of the lead frame element, a structural further development of the inventive idea cited above provides that the end section of the lead frame element exhibit two contact sections connected with each other on a shared side, which are arranged at roughly a right angle to each other in a non-deformed state, and yield a receptacle for the end section of the lead.

A basically alternative embodiment of the connection between the end area of the lead frame element and suppressor choke lead can provide that the connection be established by an insulation displacement connection.

In order to avoid additional components when using an insulation displacement connection, the invention provides that the insulation displacement connection exhibit a special V-shaped cutting area at an end area of the lead frame element, into which the lead of the suppressor choke can be introduced.

A particularly robust and reliable connection is achieved when using an insulation displacement connection by folding back the end area of the lead frame element in the cutting area, thus making the thickness in the cutting area roughly twice the thickness of the lead frame element in the area that has not been folded.

Another basically alternative embodiment of a crimp or insulation displacement connection can provide that the connection between the connection line and suppressor choke lead consist of a clamped joint. The advantage to such a clamped joint in particular is that the suppressor choke lead is subjected to a relatively low mechanical load.

A first structural embodiment of such a clamped joint can provide that the clamped joint exhibit a section arranged relative to the lead frame element at least essentially parallel to an end area of the lead frame element, so that the lead is accommodated in the area of the section.

In order to create the section that serves to accommodate the lead, a preferred structural embodiment provides that the section be formed by folding back the end area of the lead frame element.

As an alternative to the above, another structural configuration can provide that the section be joined with the end area of the lead frame by a connecting section, and that the connecting section be formed by bending the end area of the lead frame element and the section.

In addition, it is eminently preferred that the folded-back end area of the lead frame element exhibit a retaining projection that downwardly protrudes perpendicular to the plane of the lead frame element and abuts against a brush carrier plate in order to axially position or secure the end section of the lead frame element, which usually traverses the brush carrier plate in a through opening.

In all connections discussed above, it can further be provided that the connection exhibits an additional welded joint to additionally secure the respective connection.

In order to secure the axial positioning of the lead frame element in the area of the brush carrier plate, it is in like manner provided that the lead frame element exhibit a retaining section on the side of a brush carrier plate facing away from the suppressor choke, which is designed to abut against the brush carrier plate on the side facing away from the suppressor choke.

Finally, the invention also encompasses a brush carrier device for an electric motor with the use of a connecting system according to the invention.

Additional advantages, features and details of the invention may be gleaned from the following description of preferred exemplary embodiments, as well as based on the drawing.

Shown on:
- Fig. 1: is a perspective view depicting a brush holder plate with an inventive connecting system between a suppressor choke and an electrical connection line according to prior art,
- Fig. 2 and Fig.3: is a respective perspective view depicting a connection line designed as a lead frame before and after shaping an end area,
- Fig. 4 and Fig. 5: is a respective perspective view depicting the connection area between the connection line according to Fig. 2 and 3 and the lead of a suppressor choke before and after establishing the connection,
- Fig. 6: is a bottom view of the brush holder plate according to Fig. 1,
- Fig. 7: is a side view of a connecting system with the use of an insulation displacement connection between the connection line and the lead,
- Fig. 8: is a section through the VIII-VIII plane on Fig. 7,
- Fig. 9: is a perspective view of the lead frame element used in the insulation displacement connection according to Fig. 7 and 8,
- Fig. 10: is a side view of the connection area when using a clamped joint,
- Fig. 11: is a section through the X-X plane on Fig. 10,
- Fig. 12: is a perspective view depicting the lead frame element of the kind used in a clamped joint according to Fig. 10 and 11,
- Fig. 13: is a perspective view depicting a clamped joint modified in relation to Fig. 10,
- Fig. 14: is a perspective view of a lead frame element of the kind used in a clamped joint according to Fig. 13.

Identical elements or elements having the same function are marked with the same reference numbers on the figures.

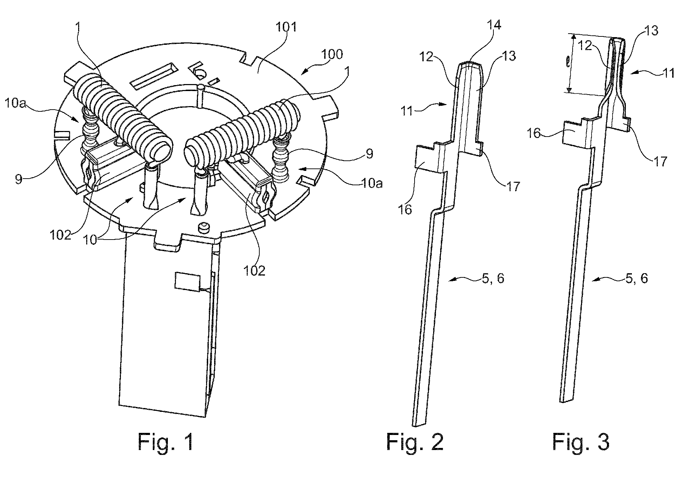

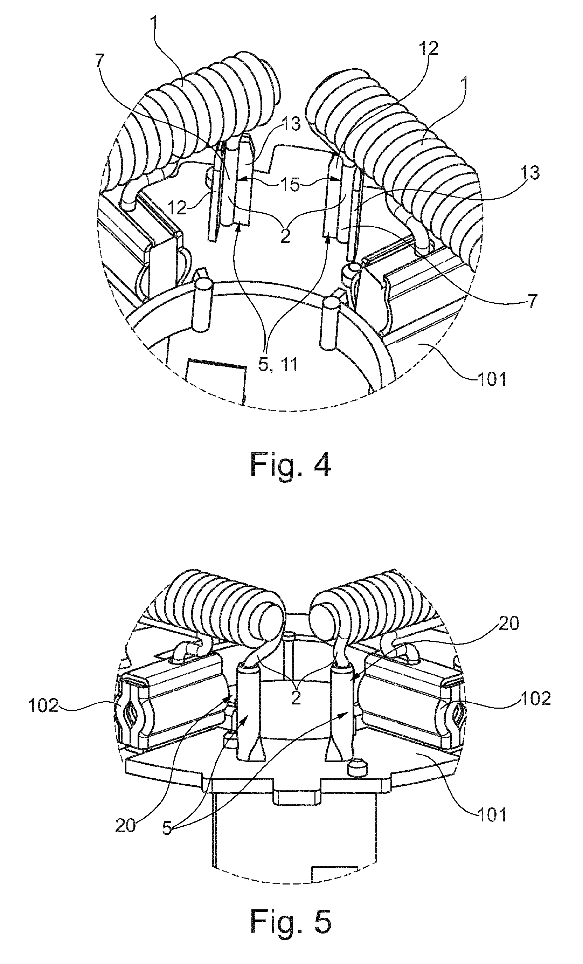

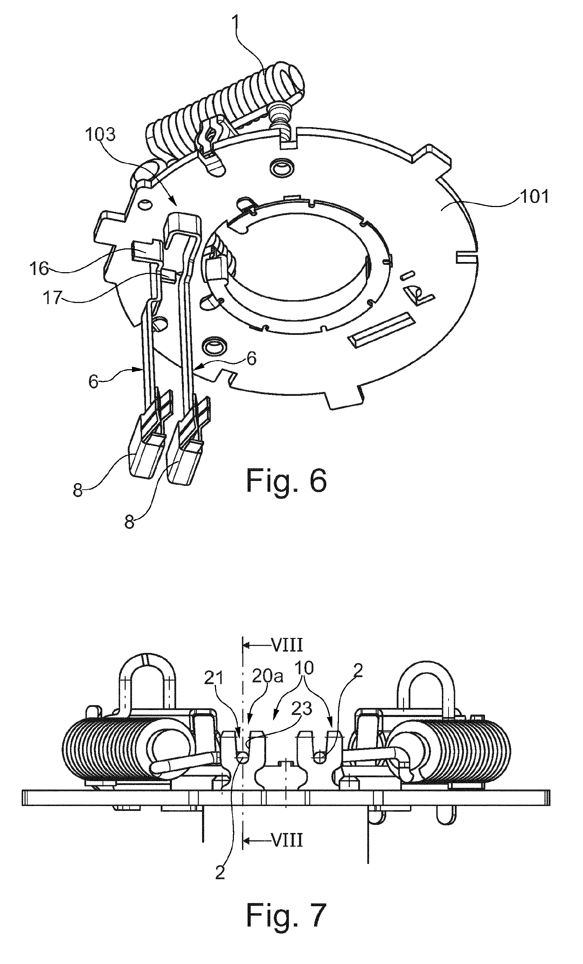

Fig. 1 shows a brush carrier device 100 with a brush holder plate 101 of the kind used in an electric motor (not depicted), which in particular is a constituent of a windshield wiper motor. The brush holder plate 101 is used in a known manner for arranging the brush holders 102 discernible on Fig. 1, in which brush elements (not depicted) are adjustably situated, which are exposed to a force exerted by a spring action in the direction of a commutator of the electric motor. The brush holders 102 or brush elements are connected in an electrically conductive manner with suppressor chokes 1, which exhibit an electrical lead 2, as shown on Fig. 4 and 5. The lead 2 is connected in an electrically conductive manner with an electrical connection line 5, which is designed as a pencil-shaped lead frame element 6, as depicted on Fig. 2 and 3. The lead frame element 6 or electrical connection line 5 is in turn connected at least indirectly with an electrical plug of the electric motor or windshield wiper motor on the side facing away from the lead 2 in a manner known in the art, and thus not depicted. To this end, it can be provided as depicted on Fig. 6 that the end areas of the lead frame elements 6 facing away from the lead 2 be connected with the clamping devices 8 used for purposes of electrical contacting.

The invention relates to the connecting system 10 between a lead 2 of the suppressor choke 1 and an end area 11 of the connection line 5 or lead frame element 6 to be connected with the lead 2 in the area of a connection 20. In order to explain the inventive connection 20, Fig. 1 shows both connecting systems 10 according to the invention as well as connecting systems 10a designed based on prior art. As evident in particular from Fig. 1, in a connecting system 10a according to prior art, the connection between the lead 2 and corresponding end area 11 of the lead frame element 6 (not shown in detail) is established using a sleeve-shaped crimp element 9, which, after the lead 2 and end area 11 of the lead frame element 6 have been introduced into the crimp element 9, is subjected to plastic deformation with a suitable crimping tool in such a way that the crimp element 9 composed of electrically conducting material establishes the electrical connection between the lead 2 and lead frame element 6. In addition, it can be provided that the connecting system 10a exhibits a welded or soldered joint to further secure the connecting system 10a.

By contrast, a connecting system 10 according to the invention provides that the end area 11 of the lead frame element 6 exhibit a special kind of design. As evident in particular from Fig. 2 and 3, before the connection 20 is established with an end section 7 of the lead 2, the end area 11 of the lead frame element 6 is equipped with two contact sections 12, 13 situated at 90° relative to each other, which are joined together as a single piece in the area of a connecting edge 14 extending in the longitudinal direction of the lead frame element 6. The length I selected for the two contact sections 12, 13 is large enough to enable an electrically conductive abutment against the lead 2 after the two contact sections 12, 13 have been subjected to a deformation visible on Fig. 3 and 5. In the as yet non-deformed state of the two contact sections 12, 13 shown on Fig. 2, the latter form a receptacle 15 for the lead 2, as may be seen in particular on Fig. 4.

In addition, a respective protruding retaining area 16, 17 is provided on the side of the two contact sections 12, 13 facing away from the lead 2. The two retaining areas 16, 17 arranged parallel to each other and protruding in different directions from the lead frame element 6 each comprise an axial stop for the lead frame element 6 when the latter traverses a through opening in the brush holder plate 101 from the side facing away from the suppressor choke 1, as depicted on Fig. 6.

The formation of the connection 20 will be described as follows based on a synopsis of Fig. 4 to 6: The lead frame element 6 is first made to traverse a through opening in the brush holder plate 101 from the side facing away from the suppressor choke 1, until the two retaining areas 16, 17 hit the lower side 103 of the brush holder plate 101, and thereby define the axial end position of the lead frame element 6. A lead 2 can then be introduced into the receptacle 15 formed by the contact sections 12, 13, as may be gleaned from Fig. 4. The two contact sections 12, 13 are subsequently bent or deformed relative to each other by means of a (crimp) tool, which is known in the art and thus not shown, in such a way that the lead 2 comes to abut against the contact sections 12, 13 of the end area in an electrically conductive manner with the formation of a non-positive connection (Fig. 5). It can optionally be provided that the (crimp) tool not only deform the two contact sections 12, 13, but be simultaneously designed as a welding tool, so that another welded joint (not shown) is formed between the contact sections 12, 13 and the lead 2 in the deformed state of the two contact sections 12, 13.

An alternative embodiment of the assembly process can also provide that the suppressor choke 1 already be preassembled on the brush holder plate 101, i.e., that the lead 2 already be aligned with the through opening in the brush holder plate 101 or the lead frame element 6. The end area 11 of the lead frame element 6 is subsequently guided in an axial direction around the lead 2, and then deformed by the mentioned (crimp) tool.

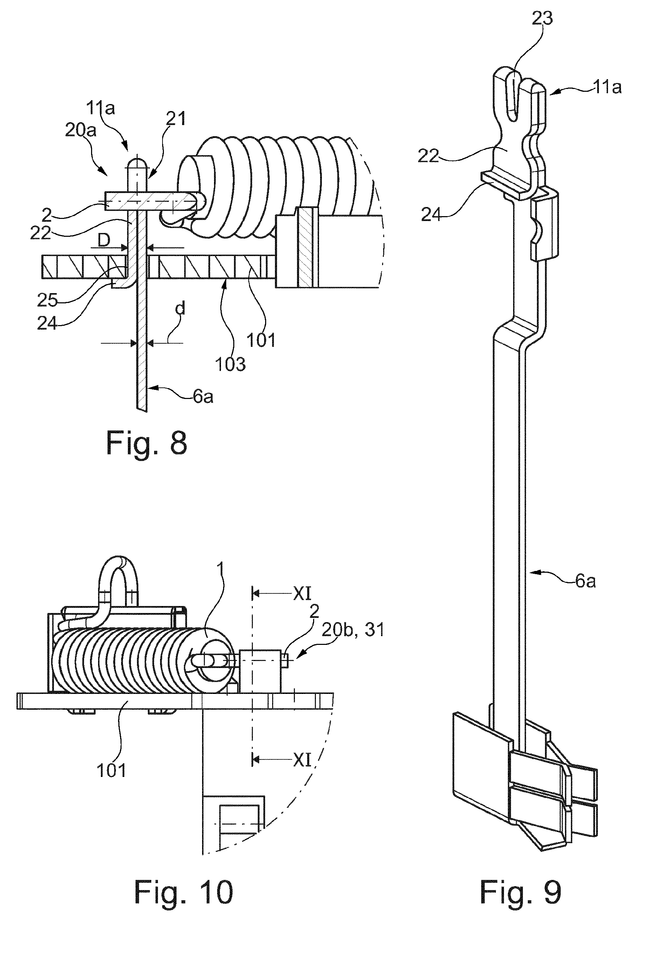

Fig. 7 to 9 show a connection 20a that forms an insulation displacement connection 21 between a lead 2 and a lead frame element 6a. To this end, the lead frame element 6a exhibits a back-folded section 22, which is arranged in the end area 11 a of the lead frame element 6a. The end area 11 a is provided in particular with a V-shaped cutting area 23, into which the lead 2 according to Fig. 8 can be introduced in an axial direction, wherein the insulation displacement connection 21 is designed for electrically contacting between the lead frame element 6a and lead 2. As evident from Fig. 8, the back-folded section 22 imparts a thickness D to the lead frame element 6a in the area of the connection 20a that is twice as large as the thickness d of the lead frame element 6a in the area that has not been folded back. Further visible is at least one retaining area 24, which downwardly protrudes at roughly a right angle from the section 22 on the side facing away from the cutting area 23, and forms an axial stop for the lead frame element 6a as the lead frame element 6a is made to traverse a through opening 25 in the brush holder plate 101, similarly to the retaining areas 16, 17 for the lead frame element 6.

In addition to the insulation displacement connection 21, it can also be provided for the connection 20a that a welded or soldered joint be formed between the lead 12 and lead frame element 6a (not shown).

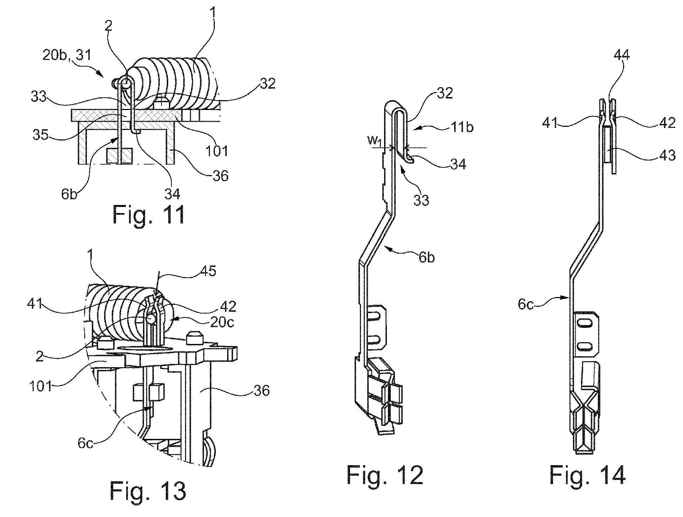

Fig. 10 to 12 show a connection 20b designed as a clamped joint 31 between the lead 2 and lead frame element 6b. To this end, the end area 11 b of the lead frame element 6b exhibits a back-folded section 32, which comprises a receptacle 33 for the lead 2. The receptacle 33 is here essentially designed like a slit with a constant opening width w₁. The area of the section 32 facing away from the lead 2 is bent away from the section 32 at roughly a right angle with the formation of a retaining area 34, for example so as to not only form an axial stop for the lead frame element 6b while traversing a through opening 35 of the brush holder plate 101 as depicted on Fig. 11, but simultaneously to fix or secure a housing 36 in the exemplary embodiment shown. The opening width w₁ of the receptacle 33 is adjusted in particular to the wire diameter of the lead 2 in such a way that the opening width w₁ roughly corresponds to the diameter of the lead 2. In designing the clamped joint 31, it is essential that the section 32 exert a clamping or retaining force on the lead 2. This can be accomplished either by correspondingly varying the opening width w₁ to require that the receptacle 22 or section 32 elastically expand to introduce the lead 2, or by making the through opening 35 so small as to elastically deform the section 32 in the direction of the lead frame element 6b, wherein the lead 2 is clamped into the receptacle 33 at the same time.

Finally, Fig. 13 and 14 show a connection 20c that has been modified by comparison to Fig. 10 to 12. The lead frame element 6c used here exhibits two clamping sections 41, 42 situated parallel to each other, which are joined together by a connecting section 43 arranged at a right angle to the clamping sections 41, 42. On the side facing the lead 2, the two clamping sections 41, 42 form an insertion area 44, through which the lead 2 can be introduced between the two clamping sections 41, 42 in the direction of the arrow 45. In the end position of the lead 2 shown on Fig. 13, it can be provided that a welded or soldered joint be formed between the two clamping sections 41, 42 and lead 2 at the height of the lead 2.

The connections 20, 20a, 20b and 20c described in this respect or the connecting system 10 can be altered or modified in a variety of ways without deviating from the inventive idea.

### Reference numbers

- 1: Suppressor choke
- 2: Lead
- 5: Connection line
- 6: Lead frame element
- 6a: Lead frame element
- 6b: Lead frame element
- 6c: Lead frame element
- 7: End section
- 8: Clamping device
- 9: Crimp element
- 10: Connecting system
- 10a: Connecting system
- 11: End area
- 11a: End area
- 11b: End area
- 12: Contact section
- 13: Contact section
- 14: Connecting edge
- 15: Receptacle
- 16: Retaining area
- 17: Retaining area
- 20: Connection
- 20a: Connection
- 20b: Connection
- 20c: Connection
- 21: Insulation displacement connection
- 22: Section
- 23: Cutting area
- 24: Retaining area
- 25: Through opening
- 31: Clamped joint
- 32: Section
- 33: Receptacle
- 34: Retaining area
- 35: Through opening
- 36: Housing
- 41: Clamping section
- 42: Clamping section
- 43: Connecting section
- 44: Insertion area
- 45: Arrow

- 100: Brush carrier device
- 101: Brush holder plate
- 102: Brush holder
- 103: Lower side

- d: Thickness
- D: Thickness
- I: Length
- w₁: Opening width

## Claims

1. A connecting system (10) between a suppressor choke (1) and an electrical connection line (5) in a brush carrier device (100) of an electric motor, wherein the suppressor choke (1) exhibits a lead (2) which is connected with the connection line (5) designed as a lead frame element (6; 6a; 6b; 6c) in the area of a connection (20; 20a; 20b; 20c),
**characterized in that**
the connection (20; 20a; 20b; 20c) between the lead (2) and connection line (5) is established directly, without any additional components.

2. The connecting system according to claim 1, **characterized in that** the connection (20) is established by at least regionally shaping an end section (11) of the lead frame element (6) around an end section (7) of the lead (2).

3. The connecting system according to claim 2, **characterized in that** the end section (11) of the lead frame element (6) exhibits two contact sections (12, 13) connected with each other on a shared side, which are arranged at roughly a right angle to each other in a non-deformed state, and yield a receptacle (15) for the end section (7) of the lead (2).

4. The connecting system according to claim 1, **characterized in that** the connection (20a) is designed to establish an insulation displacement connection (21).

5. The connecting system according to claim 4, **characterized in that** the insulation displacement connection (21) exhibits in particular a V-shaped cutting area (23) at an end area of the lead frame element (6a), into which the lead (2) of the suppressor choke (1) can be introduced.

6. The connecting system according to claim 5, **characterized in that** the end area of the lead frame element (6a) exhibits a folded-back section (22) in the cutting area (23), so that the thickness (D) of the lead frame element (6a) in the cutting area (23) is roughly twice as large as the thickness (d) of the lead frame element (6a) in an area that has not been folded back.

7. The connecting system according to claim 1, **characterized in that** the connection (20b; 20c) is designed to establish a clamped joint (31).

8. The connecting system according to claim 7, **characterized in that** the clamped joint (35) exhibits a section (32; 42) arranged relative to the lead frame element (6b) at least essentially parallel to an end area of the lead frame element (6b; 6c), so that the lead (2) is clamped in the area of the section (32; 42).

9. The connecting system according to claim 8, **characterized in that** the section (32) is formed by folding back the end area of the lead frame element (6b).

10. The connecting system according to claim 8, **characterized in that** the section (42) is joined with the end area of the lead frame element (6c) by a connecting section (43).

11. The connecting system according to claim 6 or 9, **characterized in that** the folded-back end area of the lead frame element (6a; 6b) exhibits a retaining projection (24, 34) that downwardly protrudes perpendicular to the plane of the lead frame element (6a; 6b) and abuts against a brush carrier plate (101).

12. The connecting system according to one of claims 1 to 11, **characterized in that** the connection (20; 20a; 20b; 20c) additionally exhibits a welded joint.

13. The connecting system according to one of claims 1 to 12, **characterized in that** the frame element (6; 6a; 6b) exhibits a retaining section (16, 17; 24; 34) on the side of a brush carrier plate (101) facing away from the suppressor choke (1), which is designed to abut against the brush carrier plate (101) on the side facing away from the suppressor choke (1).

14. A brush carrier device (100) for an electric motor with a connecting system (10) according to one of claims 1 to 13.
